# EUROPEAN PATENT APPLICATION

(11) **EP 4 745 652 A1**
(43) Date of publication of application: **20.05.2026**
(21) Application number: 24857684.5
(22) Date of filing: 05.03.2024
(51) Int. Cl.: G02B 27/28, G02B 27/10, G02B 6/12

(54) **OPTICAL MODULE, OPTICAL SYSTEM, OPTICAL TRANSCEIVER MODULE, LASER RADAR AND OPTICAL AMPLIFICATION SYSTEM**

(30) Priority: 29.08.2023 CN 202322339615 U
(71) Applicant: Huawei Technologies Co., Ltd., Shenzhen, Guangdong 518129 (CN)
(72) Inventor: SONG, Xiaolu, Shenzhen, Guangdong 518129 (CN); LENG, Lemeng, Shenzhen, Guangdong 518129 (CN); GUI, Chengcheng, Shenzhen, Guangdong 518129 (CN); LI, Yang, Shenzhen, Guangdong 518129 (CN)
(74) Representative: Gill Jennings & Every LLP
(86) International application number: PCT/CN2024/080032
(87) International publication number: WO 2025/044129

(57) **Abstract**

Embodiments of this application disclose an optical module and an apparatus related to the optical module. The optical module implements bidirectional optical transmission based on a principle of polarization beam splitting. Specifically, the optical module includes a first port, a second port, and a third port, where an optical path in an optical transmitting direction is from the first port to the second port, and an optical path in an optical receiving direction is from the second port to the third port. The optical module has a high integration level, is easy to implement miniaturization, and has a low insertion loss. Moreover, a light beam input from the first port may be a dual-polarized light beam, so that the first port can be connected to a normal optical fiber instead of a polarization maintaining optical fiber, to reduce costs. In addition, the first port and the third port are disposed side by side on a same side of the optical module, the first port is configured to be connected to an optical transmitting module, the third port is configured to be connected to an optical receiving module, and the optical transmitting module and the optical receiving module can be designed more compactly instead of being too far apart.

## Description

This application claims priority to Chinese Patent Application No. 202322339615.4, filed with the China National Intellectual Property Administration on August 29, 2023 and entitled "OPTICAL MODULE, OPTICAL SYSTEM, OPTICAL TRANSCEIVER MODULE, LIDAR, AND OPTICAL AMPLIFICATION SYSTEM", which is incorporated herein by reference in its entirety.

### TECHNICAL FIELD

Embodiments of this application relate to the optical transmission field, and in particular, to an optical module, an optical system, an optical transceiver module, a lidar, and an optical amplification system.

### BACKGROUND

In the field of optical communication technologies, optical transceiver components are classified into an optical transmit-side component and an optical receive-side component. The transmit-side component is a core unit that converts an electrical signal into an optical signal, and couples the optical signal to an optical fiber for optical transmission. The receive-side component is a core unit that couples the optical signal transmitted in the optical fiber to a receiver, and converts the optical signal into an electrical signal.

In an optical communication system, optical transceiver components are further assembled into an optical transceiver module. A conventional dual-fiber bidirectional optical transceiver module usually has two ports. An optical transmit-side component corresponds to an optical transmitting port and is connected to one optical fiber. An optical receive-side component corresponds to an optical receiving port and is connected to the other optical fiber. A single-fiber bidirectional (Bi-Direction, Bi-Di) optical module has only one port that is connected to one optical fiber, to transmit and receive optical signals. Therefore, a main advantage of the Bi-Di optical module is to save an optical fiber resource and minimize a waste of other system ports on an optical transmission system link. However, the existing Bi-Di optical module has problems of a large occupied space, a high insertion loss, and high costs.

### SUMMARY

Embodiments of this application provide an optical module and an apparatus related to the optical module. The optical module has a high integration level, is easy to implement miniaturization, and has a low insertion loss.

According to a first aspect, an embodiment of this application provides an optical module. The optical module includes a first port, a second port, a third port, a first polarization beam combining and splitting module, a second polarization beam combining and splitting module, a polarization adjustment module, and a magnet. The first port and the third port are disposed on a first end face of the first polarization beam combining and splitting module, and the second port is disposed on a first end face of the second polarization beam combining and splitting module. The polarization adjustment module and the magnet are located between the first polarization beam combining and splitting module and the second polarization beam combining and splitting module. At least one end face of the polarization adjustment module other than two end faces in a first direction is attached to the magnet, and the magnet is configured to provide magnetism for the polarization adjustment module. The first direction is a direction in which light is input into the polarization adjustment module in an optical transmitting direction, a second direction is a direction in which light is input into the polarization adjustment module in an optical receiving direction, and the first direction is opposite to the second direction.

In the optical transmitting direction, the first polarization beam combining and splitting module is configured to perform polarization beam splitting on a first light beam input from the first port, to obtain first polarized light having a first polarization state and second polarized light having a second polarization state. The first polarization state and the second polarization state are orthogonal to each other. Next, the first polarized light is still the first polarized light after passing through the polarization adjustment module, and the second polarized light is still the second polarized light after passing through the polarization adjustment module. Further, the second polarization beam combining and splitting module is configured to perform polarization beam combining on the first polarized light and the second polarized light to obtain a second light beam, where the second light beam is output from the second port. In the optical receiving direction, the second polarization beam combining and splitting module is further configured to perform polarization beam splitting on a third light beam input from the second port, to obtain third polarized light having the first polarization state and fourth polarized light having the second polarization state. Next, after passing through the polarization adjustment module, the third polarized light becomes fifth polarized light having the second polarization state, and after passing through the polarization adjustment module, the fourth polarized light becomes sixth polarized light having the first polarization state. Further, the first polarization beam combining and splitting module is further configured to perform polarization beam combining on the fifth polarized light and the sixth polarized light to obtain a fourth light beam, where the fourth light beam is output from the third port.

In this implementation, the optical module implements bidirectional optical transmission based on a principle of polarization beam splitting. The optical module has a high integration level, is easy to implement miniaturization, and has a low insertion loss. Moreover, a light beam input from the first port may be a dual-polarized light beam, so that the first port can be connected to a normal optical fiber instead of a polarization maintaining optical fiber, to reduce costs. The first port and the third port are disposed side by side on a same side of the optical module, the first port is configured to be connected to an optical transmitting module, the third port is configured to be connected to an optical receiving module, and the optical transmitting module and the optical receiving module can be designed more compactly instead of being too far apart. In addition, both the magnet and the polarization adjustment module are disposed between the first polarization beam combining and splitting module and the second polarization beam combining and splitting module, so that an overall structure of the optical module is more compact.

In some possible implementations, the first light beam is a multi-wavelength light beam, to adapt to a multi-wavelength transmission scenario.

In some possible implementations, a light beam of a first portion of wavelengths in the first light beam has the first polarization state, and a light beam of a second portion of wavelengths in the first light beam has the second polarization state. Alternatively, a light beam of at least one wavelength in the first light beam includes the first polarization state and the second polarization state. A plurality of implementations of a multi-wavelength input are described herein, and an application scenario of this solution is extended.

In some possible implementations, a first end face of the polarization adjustment module is attached to a second end face of the first polarization beam combining and splitting module, a second end face of the polarization adjustment module is attached to a second end face of the second polarization beam combining and splitting module, the first end face and the second end face of the first polarization beam combining and splitting module are parallel to each other, and the first end face and the second end face of the second polarization beam combining and splitting module are parallel to each other. In other words, the optical module is of an integrated structure, that is, components in the optical module are seamlessly spliced together, so that an overall structure of the optical module is more compact, to help implement miniaturization of the optical module.

In some possible implementations, two side end faces of the polarization adjustment module are respectively completely aligned with and attached to the first polarization beam combining and splitting module and the second polarization beam combining and splitting module, so that an overall structure of the optical module is more regular.

In some possible implementations, the optical module further includes a first reflective element, a second reflective element, and a third reflective element. The first reflective element is disposed on a third end face of the first polarization beam combining and splitting module, the second reflective element is disposed on a fourth end face of the first polarization beam combining and splitting module, and the third reflective element is disposed on a third end face of the second polarization beam combining and splitting module. The third end face of the first polarization beam combining and splitting module, the fourth end face of the first polarization beam combining and splitting module, and the third end face of the second polarization beam combining and splitting module are parallel to each other. In the optical transmitting direction, the first reflective element is configured to reflect the first light beam input from the first port. The first polarization beam combining and splitting module is configured to transmit the first polarized light and reflect the second polarized light. The second reflective element is configured to reflect the first polarized light to the polarization adjustment module. The third reflective element is configured to reflect the second polarized light that passes through the polarization adjustment module. The second polarization beam combining and splitting module is configured to transmit the first polarized light and reflect the second polarized light to obtain the second light beam. In the optical receiving direction, the second polarization beam combining and splitting module is further configured to transmit the third polarized light and reflect the fourth polarized light. The third reflective element is further configured to reflect the fourth polarized light to the polarization adjustment module. The second reflective element is further configured to reflect the fifth polarized light that passes through the polarization adjustment module. The first polarization beam combining and splitting module is further configured to transmit the sixth polarized light and reflect the fifth polarized light to obtain the fourth light beam. Herein, a design manner of an optical path in the optical module is provided. An entire optical path is simple, and optical paths of light in two polarization states in the optical module are similar or the same, so that an implementation effect is better.

In some possible implementations, the first port, the second port, and the third port are all connected to a multi-mode optical fiber. Alternatively, the first port is connected to a single-mode optical fiber, and the second port and the third port are connected to a multi-mode optical fiber. Alternatively, the first port and the second port are connected to a single-mode optical fiber, and the third port is connected to a multi-mode optical fiber. It should be understood that currently, a single-mode optical fiber is mainly used with a single-fiber bidirectional scenario, and the optical module designed in this application may also be used with a multi-mode optical fiber, to extend an application scenario of this application.

In some possible implementations, the polarization adjustment module includes a first polarization adjustment apparatus and a second polarization adjustment apparatus. In the optical transmitting direction, the first polarization adjustment apparatus is configured to perform polarization adjustment on the first polarized light input in the first direction to obtain the first polarized light, and the second polarization adjustment apparatus is configured to perform polarization adjustment on the second polarized light input in the first direction to obtain the second polarized light. In the optical receiving direction, the first polarization adjustment apparatus is further configured to perform polarization adjustment on the third polarized light input in the second direction to obtain the fifth polarized light having the second polarization state, and the second polarization adjustment apparatus is further configured to perform polarization adjustment on the fourth polarized light input in the second direction to obtain the sixth polarized light having the first polarization state. In this implementation, the polarization adjustment module may include two polarization adjustment apparatuses, and each polarization adjustment apparatus is configured to process one path of polarized light corresponding to the polarization adjustment apparatus, to extend an implementation of this solution.

In some possible implementations, the first polarization adjustment apparatus includes a first Faraday rotator (Faraday Rotator, FR) and a first half-wave plate (Half-Wave Plate, HWP), and the second polarization adjustment apparatus includes a second FR and a second HWP. In the optical transmitting direction, the first FR is configured to rotate a polarization state of the first polarized light by 45° toward a fifth direction, and the first HWP is configured to rotate a polarization state of polarized light passing through the first FR by 45° toward a sixth direction to obtain the first polarized light, where the fifth direction is opposite to the sixth direction. In the optical transmitting direction, the second FR is configured to rotate a polarization state of the second polarized light by 45° toward the fifth direction, and the second HWP is configured to rotate a polarization state of polarized light passing through the second FR by 45° toward the sixth direction, to obtain the second polarized light. In the optical receiving direction, the first HWP is further configured to rotate a polarization state of the third polarized light by 45° toward the fifth direction, and the first FR is further configured to rotate a polarization state of polarized light passing through the first HWP by 45° toward the fifth direction, to obtain the fifth polarized light. In the optical receiving direction, the second HWP is further configured to rotate a polarization state of the fourth polarized light by 45° toward the fifth direction, and the second FR is further configured to rotate a polarization state of the polarized light passing through the second HWP by 45° toward the fifth direction, to obtain the sixth polarized light. This implementation provides a specific implementation of the first polarization adjustment apparatus and the second polarization adjustment apparatus, to improve implementability of this solution.

In some possible implementations, the first polarization adjustment apparatus includes a first FR and a first HWP, and the second polarization adjustment apparatus includes a second FR and a second HWP. In the optical transmitting direction, the first HWP is configured to rotate a polarization state of the first polarized light by 45° toward a fifth direction, and the first FR is configured to rotate a polarization state of polarized light passing through the first HWP by 45° toward a sixth direction to obtain the first polarized light, where the fifth direction is opposite to the sixth direction. In the optical transmitting direction, the second HWP is configured to rotate a polarization state of the second polarized light by 45° toward the fifth direction, and the second FR is configured to rotate a polarization state of polarized light passing through the second HWP by 45° toward the sixth direction, to obtain the second polarized light. In the optical receiving direction, the first FR is further configured to rotate a polarization state of the third polarized light by 45° toward the sixth direction, and the first HWP is further configured to rotate a polarization state of polarized light passing through the first FR by 45° toward the sixth direction, to obtain the fifth polarized light. In the optical receiving direction, the second FR is further configured to rotate a polarization state of the fourth polarized light by 45° toward the sixth direction, and the second HWP is further configured to rotate a polarization state of the polarized light passing through the second FR by 45° toward the sixth direction, to obtain the sixth polarized light. This implementation provides a specific implementation of another first polarization adjustment apparatus and another second polarization adjustment apparatus, to improve flexibility of this solution.

In some possible implementations, the first FR is attached to the second FR in a third direction, and the third direction is perpendicular to the first direction. The magnet is configured to provide magnetism for the first FR and the second FR, to ensure normal operation of the first FR and the second FR.

In some possible implementations, another end face of the first FR in the third direction other than an end face attached to the second FR is attached to the magnet, and another end face of the second FR in the third direction other than an end face attached to the first FR is attached to the magnet.

In some possible implementations, at least one of two end faces of the first FR in a fourth direction is attached to the magnet, at least one of two end faces of the first FR in the fourth direction is attached to the magnet, and the fourth direction is perpendicular to the first direction and the third direction.

In some possible implementations, the second port is preferably connected to an APC (Angled Physical Contact, APC) optical fiber connector with an oblique end face. The end face of the APC optical fiber connector is usually polished into an 8° slope. Reflected light is reflected to a cladding layer at an angle of the slope instead of directly returning to the light source along an original optical path. This minimizes impact of back reflection from an end face of the connector on a transmit end and a receive end.

In some possible implementations, in the optical receiving direction, if implementation effects of the first polarization adjustment apparatus and the second polarization adjustment apparatus are not ideal, some light may be output from the first port and transmitted to the light source. To avoid this case, an isolator may be added between the first port and the light source, and a light beam output from the first port is isolated by using the isolator.

According to a second aspect, an embodiment of this application provides an optical module. The optical module includes a first port, a second port, a third port, a first polarization beam combining and splitting module, a second polarization beam combining and splitting module, a polarization adjustment module, and a magnet. The first port and the third port are disposed on a first end face of the first polarization beam combining and splitting module, and the second port is disposed on a first end face of the second polarization beam combining and splitting module. The polarization adjustment module and the magnet are located between the first polarization beam combining and splitting module and the second polarization beam combining and splitting module. At least one end face of the polarization adjustment module other than two end faces in a first direction is attached to the magnet, and the magnet is configured to provide magnetism for the polarization adjustment module. The first direction is a direction in which light is input into the polarization adjustment module in an optical transmitting direction, a second direction is a direction in which light is input into the polarization adjustment module in an optical receiving direction, and the first direction is opposite to the second direction.

In the optical transmitting direction, the first polarization beam combining and splitting module is configured to transmit a first light beam input from the first port, where the first light beam has a first polarization state. Next, the first light beam is still the first light beam after passing through the polarization adjustment module. Further, the second polarization beam combining and splitting module is configured to transmit the first light beam, where the first light beam is output from the second port. In the optical receiving direction, the second polarization beam combining and splitting module is further configured to perform polarization beam splitting on a second light beam input from the second port, to obtain first polarized light having a first polarization state and second polarized light having a second polarization state. Next, after passing through the polarization adjustment module, the first polarized light becomes third polarized light having the second polarization state. After passing through the polarization adjustment module, the second polarized light becomes fourth polarized light having the first polarization state. Further, the first polarization beam combining and splitting module is further configured to perform polarization beam combining on the third polarized light and the fourth polarized light to obtain the third light beam, where the third light beam is output from the third port.

In this implementation, the optical module implements bidirectional optical transmission based on a principle of polarization beam splitting. The optical module has a high integration level, is easy to implement miniaturization, and has a low insertion loss. In addition, the optical module supports inputting a single-polarized light beam from the first port in the optical transmitting direction, to extend an application scenario of the optical module. The first port and the third port are disposed side by side on a same side of the optical module, the first port is configured to be connected to an optical transmitting module, the third port is configured to be connected to an optical receiving module, and the optical transmitting module and the optical receiving module can be designed more compactly instead of being too far apart. In addition, both the magnet and the polarization adjustment module are disposed between the first polarization beam combining and splitting module and the second polarization beam combining and splitting module, so that an overall structure of the optical module is more compact.

In some possible implementations, the first light beam is a multi-wavelength light beam, to adapt to a multi-wavelength transmission scenario.

In some possible implementations, a first end face of the polarization adjustment module is attached to a second end face of the first polarization beam combining and splitting module, a second end face of the polarization adjustment module is attached to a second end face of the second polarization beam combining and splitting module, the first end face and the second end face of the first polarization beam combining and splitting module are parallel to each other, and the first end face and the second end face of the second polarization beam combining and splitting module are parallel to each other. In other words, the optical module is of an integrated structure, that is, components in the optical module are seamlessly spliced together, so that an overall structure of the optical module is more compact, to help implement miniaturization of the optical module.

In some possible implementations, two side end faces of the polarization adjustment module are respectively completely aligned with and attached to the first polarization beam combining and splitting module and the second polarization beam combining and splitting module, so that an overall structure of the optical module is more regular.

In some possible implementations, the optical module further includes a first reflective element, a second reflective element, and a third reflective element. The first reflective element is disposed on a third end face of the first polarization beam combining and splitting module, the second reflective element is disposed on a fourth end face of the first polarization beam combining and splitting module, and the third reflective element is disposed on a third end face of the second polarization beam combining and splitting module. The third end face of the first polarization beam combining and splitting module, the fourth end face of the first polarization beam combining and splitting module, and the third end face of the second polarization beam combining and splitting module are parallel to each other. In the optical transmitting direction, the first reflective element is configured to reflect the first light beam input from the first port. The second reflective element is configured to reflect the first light beam passing through the first polarization beam combining and splitting module to the polarization adjustment module, and transmit the first light beam to the second port through the second polarization beam combining and splitting module. In the optical receiving direction, the second polarization beam combining and splitting module is further configured to transmit the first polarized light and reflect the second polarized light. The third reflective element is further configured to reflect the second polarized light to the polarization adjustment module. The second reflective element is further configured to reflect the third polarized light. The first polarization beam combining and splitting module is further configured to transmit the fourth polarized light and reflect the third polarized light to obtain the third light beam. Herein, a design manner of an optical path in the optical module is provided. An entire optical path is simple, and optical paths of light in two polarization states in the optical module are similar or the same, so that an implementation effect is better.

In some possible implementations, the first port, the second port, and the third port are all connected to a multi-mode optical fiber. Alternatively, the first port is connected to a single-mode optical fiber, and the second port and the third port are connected to a multi-mode optical fiber. Alternatively, the first port and the second port are connected to a single-mode optical fiber, and the third port is connected to a multi-mode optical fiber. It should be understood that currently, a single-mode optical fiber is mainly used with a single-fiber bidirectional scenario, and the optical module designed in this application may also be used with a multi-mode optical fiber, to extend an application scenario of this application.

In some possible implementations, the polarization adjustment module includes a first polarization adjustment apparatus and a second polarization adjustment apparatus. In the optical transmitting direction, the first polarization adjustment apparatus is configured to perform polarization adjustment on the first light beam input in the first direction to obtain the first light beam. In the optical receiving direction, the first polarization adjustment apparatus is further configured to perform polarization adjustment on the first polarized light input in the second direction to obtain the third polarized light having the second polarization state, and the second polarization adjustment apparatus is further configured to perform polarization adjustment on the second polarized light input in the second direction to obtain the fourth polarized light having the first polarization state. In this implementation, the polarization adjustment module may include two polarization adjustment apparatuses, and each polarization adjustment apparatus is configured to process one path of polarized light corresponding to the polarization adjustment apparatus, to extend an implementation of this solution.

In some possible implementations, the first polarization adjustment apparatus includes a first FR and a first HWP, and the second polarization adjustment apparatus includes a second FR and a second HWP. In the optical transmitting direction, the first FR is configured to rotate a polarization state of the first light beam by 45° toward a fifth direction, and the first HWP is configured to rotate a polarization state of polarized light passing through the first FR by 45° toward a sixth direction to obtain the first light beam, where the fifth direction is opposite to the sixth direction. In the optical receiving direction, the first HWP is further configured to rotate a polarization state of the first polarized light by 45° toward the fifth direction, and the first FR is further configured to rotate a polarization state of polarized light passing through the first HWP by 45° toward the fifth direction, to obtain the third polarized light. In the optical receiving direction, the second HWP is further configured to rotate a polarization state of the second polarized light by 45° toward the fifth direction, and the second FR is further configured to rotate a polarization state of the polarized light passing through the second HWP by 45° toward the fifth direction, to obtain the fourth polarized light. This implementation provides a specific implementation of the first polarization adjustment apparatus and the second polarization adjustment apparatus, to improve implementability of this solution.

In some possible implementations, the first polarization adjustment apparatus includes a first FR and a first HWP, and the second polarization adjustment apparatus includes a second FR and a second HWP. In the optical transmitting direction, the first HWP is configured to rotate a polarization state of the first light beam by 45° toward a fifth direction, and the first FR is configured to rotate a polarization state of polarized light passing through the first HWP by 45° toward a sixth direction to obtain the first light beam, where the fifth direction is opposite to the sixth direction. In the optical receiving direction, the first FR is further configured to rotate a polarization state of the first polarized light by 45° toward the sixth direction, and the first HWP is further configured to rotate a polarization state of polarized light passing through the first FR by 45° toward the sixth direction, to obtain the third polarized light. In the optical receiving direction, the second FR is further configured to rotate a polarization state of the second polarized light by 45° toward the sixth direction, and the second HWP is further configured to rotate a polarization state of the polarized light passing through the second FR by 45° toward the sixth direction, to obtain the fourth polarized light. This implementation provides a specific implementation of another first polarization adjustment apparatus and another second polarization adjustment apparatus, to improve flexibility of this solution.

In some possible implementations, the first FR is attached to the second FR in a third direction, and the third direction is perpendicular to the first direction. The magnet is configured to provide magnetism for the first FR and the second FR, to ensure normal operation of the first FR and the second FR.

In some possible implementations, another end face of the first FR in the third direction other than an end face attached to the second FR is attached to the magnet, and another end face of the second FR in the third direction other than an end face attached to the first FR is attached to the magnet.

In some possible implementations, at least one of two end faces of the first FR in a fourth direction is attached to the magnet, at least one of two end faces of the first FR in the fourth direction is attached to the magnet, and the fourth direction is perpendicular to the first direction and the third direction.

In some possible implementations, the second port is preferably connected to an APC optical fiber connector with an oblique end face. The end face of the APC optical fiber connector is usually polished into an 8° slope. Reflected light is reflected to a cladding layer at an angle of the slope instead of directly returning to the light source along an original optical path. This minimizes impact of back reflection from an end face of the connector on a transmit end and a receive end.

In some possible implementations, in the optical receiving direction, if implementation effects of the first polarization adjustment apparatus and the second polarization adjustment apparatus are not ideal, some light may be output from the first port and transmitted to the light source. To avoid this case, an isolator may be added between the first port and the light source, and a light beam output from the first port is isolated by using the isolator.

According to a third aspect, an embodiment of this application provides an optical system. The optical system includes a multiplexer and the optical module described in any one of the implementations of the first aspect and the second aspect. The multiplexer includes a reflective element, a HWP, a polarization beam combiner, a first input port, a second input port, and an output port. The reflective element is configured to reflect, to the HWP, first polarized light that is input from the first input port and that has a first polarization state and a first wavelength. The HWP is configured to perform polarization adjustment on the first polarized light to obtain second polarized light having a second polarization state, where the first polarization state and the second polarization state are orthogonal to each other. The polarization beam combiner is configured to perform polarization beam combining on the second polarized light and third polarized light that is input from the second input port and that has the first polarization state and a second wavelength, to obtain a multiplexed light beam, and transmit the multiplexed light beam from the output port to a first port of the optical module. By using the multiplexer in the foregoing optical system, a plurality of light beams that are in a same polarization state but have different wavelengths may be multiplexed into a multi-wavelength dual-polarized light beam, and the multi-wavelength dual-polarized light beam is input to the optical module. This has a good practical effect in a multi-wavelength scenario. It should be understood that, during actual application, a scenario of multiplexing more wavelengths may be extended based on the two-wavelength multiplexing.

According to a fourth aspect, an embodiment of this application provides an optical transceiver module. The optical transceiver module includes an optical transmitting module, an optical receiving module, and the optical module described in any one of the implementations of the first aspect and the second aspect. The optical transmitting module is configured to send a light beam to a first port of the optical module. The optical receiving module is configured to receive a light beam from a third port of the optical module.

In some possible implementations, the optical transceiver module further includes a multiplexer and a demultiplexer. The multiplexer is configured to: multiplex N light beams that are of different wavelengths and that are transmitted by the optical transmitting module, and send a multiplexed light beam to the first port of the optical module. The demultiplexer is configured to: demultiplex a light beam from the third port of the optical module to obtain N light beams of different wavelengths, and send the N light beams of different wavelengths obtained through demultiplexing to the optical receiving module. N is an integer greater than 1.

In some possible implementations, the optical transceiver module further includes a multiplexer/demultiplexer, where the multiplexer/demultiplexer includes N uplink ports and N downlink ports, and N is an integer greater than 1. The optical transmitting module is configured to respectively transmit N light beams of different wavelengths to the N uplink ports of the multiplexer/demultiplexer. The multiplexer/demultiplexer is configured to: multiplex N light beams of different wavelengths from a light source, and send a multiplexed light beam to the first port of the optical module. The multiplexer/demultiplexer is further configured to: demultiplex a light beam from the third port of the optical module to obtain N light beams of different wavelengths, and send the N light beams of different wavelengths obtained through demultiplexing to the optical receiving module.

In some possible implementations, the optical transceiver module further includes a multiplexer/demultiplexer, and the multiplexer/demultiplexer includes a multiplexer/demultiplexer module, an uplink waveguide, a downlink waveguide, and N bidirectional waveguides. The optical transmitting module is configured to respectively transmit N light beams of different wavelengths to the N bidirectional waveguides. The multiplexer/demultiplexer module is configured to: multiplex N light beams of different wavelengths from a light source, and send a multiplexed light beam to the first port of the optical module by using the uplink waveguide. The multiplexer/demultiplexer module is further configured to: receive a light beam from the third port of the optical module by using the downlink waveguide, demultiplex the light beam from the third port of the optical module to obtain N light beams of different wavelengths, and respectively send the N light beams of different wavelengths obtained through demultiplexing to the optical receiving module by using the N bidirectional waveguides.

According to a fifth aspect, an embodiment of this application provides a lidar. The lidar includes a light source, a photoelectric detector, and the optical module described in any one of the implementations of the first aspect and the second aspect. The light source is configured to send a light beam to a first port of the optical module. A light beam output from a second port of the optical module is transmitted to a target object, and a light beam reflected by the target object is transmitted to the second port of the optical module. The photoelectric detector is configured to receive a light beam from a third port of the optical module.

According to a sixth aspect, an embodiment of this application provides an optical amplification system. The optical amplification system includes a light source, a first optical amplifier, a second optical amplifier, a reflector, and the optical module described in any one of the implementations of the first aspect and the second aspect. The first optical amplifier is configured to amplify a light beam transmitted from the light source, and transmit an amplified light beam to a first port of the optical module. The second optical amplifier is configured to amplify a light beam from a second port of the optical module, and transmit an amplified light beam to the reflector. The second optical amplifier is further configured to amplify a light beam from the reflector, and transmit an amplified light beam to the second port of the optical module.

Embodiments of this application provide an optical module, to implement bidirectional optical transmission based on a principle of polarization beam splitting. To be specific, the optical module includes a first port, a second port, and a third port, where an optical path on a transmit side is from the first port to the second port, and an optical path on a receive side is from the second port to the third port. The optical module has a high integration level, is easy to implement miniaturization, and has a low insertion loss. Moreover, a light beam input from the first port may be a dual-polarized light beam, so that the first port can be connected to a normal optical fiber instead of a polarization maintaining optical fiber, to reduce costs. The first port and the third port are disposed side by side on a same side of the optical module, the first port is configured to be connected to an optical transmitting module, the third port is configured to be connected to an optical receiving module, and the optical transmitting module and the optical receiving module can be designed more compactly instead of being too far apart. In addition, both the magnet and the polarization adjustment module are disposed between the first polarization beam combining and splitting module and the second polarization beam combining and splitting module, so that an overall structure of the optical module is more compact.

### BRIEF DESCRIPTION OF DRAWINGS

FIG. 1(a) is a three-dimensional diagram of a first structure of an optical module according to an embodiment of this application;
FIG. 1(b) is a three-dimensional diagram of a second structure of an optical module according to an embodiment of this application;
FIG. 1(c) is a three-dimensional diagram of a third structure of an optical module according to an embodiment of this application;
FIG. 2(a) is a planar diagram of a first structure of an optical module according to an embodiment of this application;
FIG. 2(b) is a planar diagram of a second structure of an optical module according to an embodiment of this application;
FIG. 3 is a diagram of an optical path of an optical module in a transmitting direction according to an embodiment of this application;
FIG. 4 is a diagram of another optical path of an optical module in a transmitting direction according to an embodiment of this application;
FIG. 5 is a diagram of an optical path of an optical module in a receiving direction according to an embodiment of this application;
FIG. 6 is a diagram of an optical path of near-end reflection of an optical module according to an embodiment of this application;
FIG. 7 is a diagram of an optical path of a polarization adjustment apparatus in an optical transmitting direction according to an embodiment of this application;
FIG. 8 is a diagram of an optical path of a polarization adjustment apparatus in an optical receiving direction according to an embodiment of this application;
FIG. 9 is a diagram of a structure of an optical transceiver module according to an embodiment of this application;
FIG. 10(a) is a diagram of a structure of a multiplexer according to an embodiment of this application;
FIG. 10(b) is a diagram of a structure of a spatial multiplexer and a spatial demultiplexer according to an embodiment of this application;
FIG. 10(c) is a diagram of a structure of a waveguide multiplexer and a waveguide demultiplexer according to an embodiment of this application;
FIG. 11 is a diagram of a structure of a multiplexer/demultiplexer according to an embodiment of this application;
FIG. 12 is a diagram of a structure of another multiplexer/demultiplexer according to an embodiment of this application;
FIG. 13 is a diagram of a first implementation of a plurality of optical modules according to an embodiment of this application;
FIG. 14 is a diagram of a second implementation of a plurality of optical modules according to an embodiment of this application;
FIG. 15 is a diagram of a structure of a lidar according to an embodiment of this application; and
FIG. 16 is a diagram of a structure of an optical amplification system according to an embodiment of this application.

### DESCRIPTION OF EMBODIMENTS

Embodiments of this application provide an optical module and an apparatus related to the optical module. The optical module has a high integration level, is easy to implement miniaturization, and has a low insertion loss. It should be noted that in the specification, claims, and the accompanying drawings of this application, the terms "first", "second", and the like are intended to distinguish between similar objects but do not limit a specific order or sequence. It should be understood that the foregoing terms may be used interchangeably in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

It should be noted that, in fields such as cloud computing, switches, routers, optical transmission, optical access, and wireless communication, introduction of a multi-wavelength single-fiber bidirectional optical component can effectively reduce a quantity of optical fibers for a transmission link by half, and minimize a waste of other system ports in the optical transmission system. For example, in a data center scenario, an optical module matching optical cross-connect needs an external circulator to enable a single-fiber bidirectional port, so as to minimize a waste of optical cross-connect ports. The optical module provided in this application is a single-fiber bidirectional optical component different from a circulator, and has advantages such as a high integration level and a low insertion loss. The following describes the optical module provided in this application in detail.

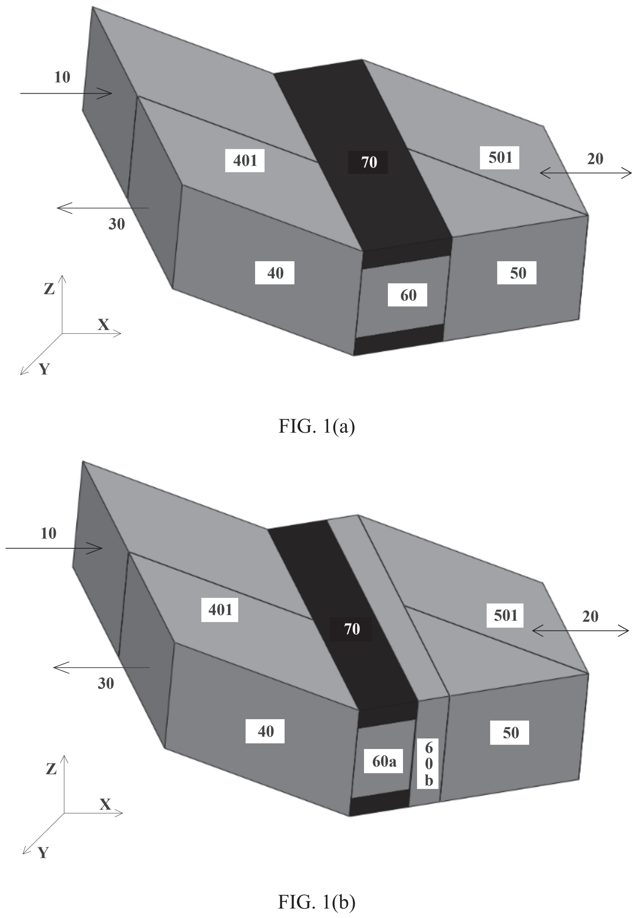

FIG. 1(a) is a three-dimensional diagram of a first structure of an optical module according to an embodiment of this application. As shown in FIG. 1(a), the optical module includes a first port 10, a second port 20, a third port 30, a first polarization beam combining and splitting module 40, a second polarization beam combining and splitting module 50, a polarization adjustment module 60, and a magnet 70. The first port 10 and the third port 30 are disposed on a first end face of the first polarization beam combining and splitting module 40, and the second port 20 is disposed on a first end face of the second polarization beam combining and splitting module 50. A first end face of the polarization adjustment module 60 is attached to a second end face of the first polarization beam combining and splitting module 40, and a second end face of the polarization adjustment module 60 is attached to a second end face of the second polarization beam combining and splitting module 50. The first end face and the second end face of the first polarization beam combining and splitting module 40 are parallel to each other, and the first end face and the second end face of the second polarization beam combining and splitting module 50 are parallel to each other. The magnet 70 is located between the first polarization beam combining and splitting module 40 and the second polarization beam combining and splitting module 50, and the magnet 70 is configured to provide magnetism for the polarization adjustment module 60. It should be understood that a first polarization beam combining and splitting plane 401 is provided in the first polarization beam combining and splitting module 40, and polarization beam splitting or polarization beam combining is implemented after light passes through the first polarization beam combining and splitting plane 401. A second polarization beam combining and splitting plane 501 is provided in the second polarization beam combining and splitting module 50, and polarization beam splitting or polarization beam combining is implemented after light passes through the second polarization beam combining and splitting plane 501.

In a coordinate axis shown in FIG. 1(a), an X axis, a Y axis, and a Z axis are perpendicular to each other. An optical input direction and an optical output direction of the optical module are on the X axis. For example, a direction in which light is input from the first port 10 is represented as a first direction, a direction in which light is output from the third port 30 is represented as a second direction, and the first direction is opposite to the second direction. It can be learned that left and right end faces of the polarization adjustment module 60 are opposite end faces on the X axis. Front and rear end faces of the polarization adjustment module 60 are opposite end faces on the Y axis. Herein, the Y axis may also be referred to as a third direction. Upper and lower end faces of the polarization adjustment module 60 are opposite end faces on the Z axis. Herein, the Z axis may also be referred to as a fourth direction.

It should be noted that the magnet 70 is attached to at least one end face of the polarization adjustment module 60 other than the left and right end faces. For example, in FIG. 1(a), the left and right end faces of the polarization adjustment module 60 are respectively attached to the first polarization beam combining and splitting module 40 and the second polarization beam combining and splitting module 50, and the upper and lower end faces of the polarization adjustment module 60 are aligned with and attached to the magnet 70. That is, the polarization adjustment module 60 and the magnet 70 may be embedded, as a whole, between the first polarization beam combining and splitting module 40 and the second polarization beam combining and splitting module 50, so that an overall structure of the optical module is more compact. It should be understood that, during actual application, at least one end face of the upper end face, the lower end face, the front end face, and the rear end face of the polarization adjustment module 60 is attached to the magnet 70. For example, a magnet attached to a plurality of end faces of the polarization adjustment module 60 may also be referred to as a magnetic ring. This helps better provide magnetism for the polarization adjustment module 60. No accompanying drawings are provided herein one by one.

It should be further noted that the magnet 70 provided in this application may be an injection-molded magnet. For example, magnetic powder, polymer material, and additive material are mixed and heated into a molten state, a molten mixture is injected into a mold under pressure to achieve a required shape through cooling and molding, and the magnet 70 is obtained through magnetic injection performed on a molded workpiece by using an external magnetic field. It should be understood that, in an injection molding process, the polarization adjustment module 60 and the magnet 70 may be alternatively integrated into an integrated workpiece through injection molding, to facilitate assembly.

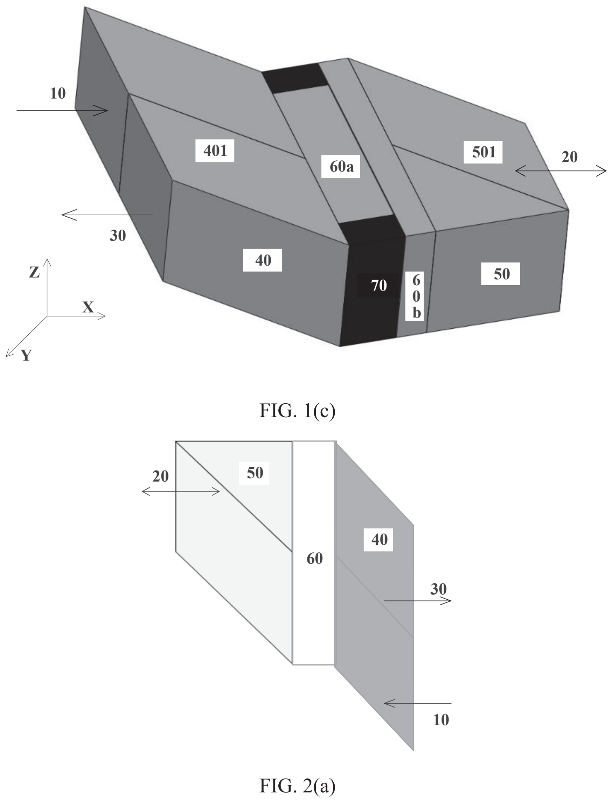

FIG. 1(b) is a three-dimensional diagram of a second structure of an optical module according to an embodiment of this application. FIG. 1(c) is a three-dimensional diagram of a third structure of an optical module according to an embodiment of this application. As shown in FIG. 1(b) and FIG. 1(c), the polarization adjustment module 60 includes a Faraday rotator (Faraday Rotator, FR) 60a and a half-wave plate (Half-Wave Plate, HWP) 60b. The magnet 70 is attached to the FR 60a, and is specifically configured to provide magnetism for the FR 60a. For example, in FIG. 1(b), upper and lower end faces of the magnet 70 are respectively aligned with and attached to upper and lower end faces of the FR 60a. For example, in FIG. 1(c), front and rear end faces of the magnet 70 are respectively aligned with and attached to front and rear end faces of the FR 60a. It should be understood that, during actual application, at least one end face of the upper end face, the lower end face, the front end face, and the rear end face of the FR 60a is attached to the magnet 70. No accompanying drawings are provided herein one by one.

The following describes an optical path in the optical module and functions of components with reference to a planar diagram of a structure of the optical module. It should be understood that the magnet 70 does not affect the optical path in the optical module, so that the magnet 70 is not presented in the planar diagram of the structure of the optical module below.

FIG. 2(a) is a planar diagram of a first structure of an optical module according to an embodiment of this application. As shown in FIG. 2(a), the optical module supports bidirectional transmission in a transmitting direction and in a receiving direction, the first port 10 is configured to be connected to an optical transmitting module, and the third port 30 is configured to be connected to an optical receiving module. A light beam in the transmitting direction is input from the first port 10 and output from the second port 20, and a light beam in the receiving direction is input from the second port 20 and output from the third port 30. Because the first port 10 and the third port 30 are disposed on a same end face of the first polarization beam combining and splitting module 40, the optical transmitting module and the optical receiving module that are externally connected to the optical module do not need to be far away from each other and can be designed to be more compact.

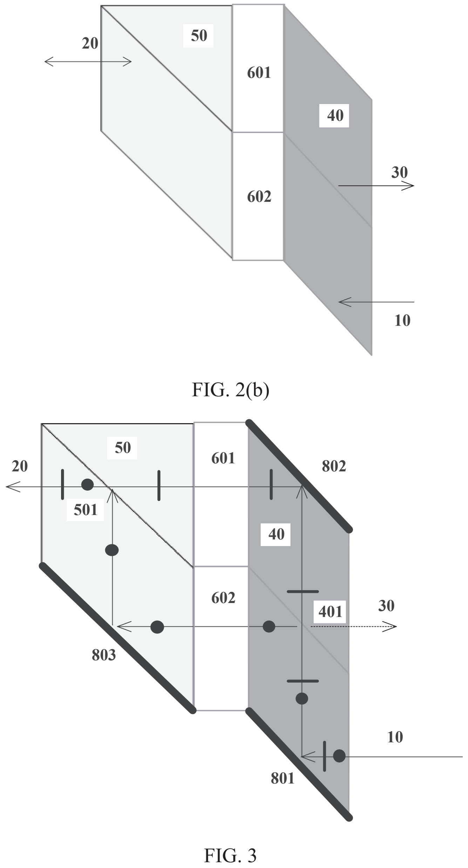

It should be understood that, both the first polarization beam combining and splitting module 40 and the second polarization beam combining and splitting module 50 are components that have both a polarization beam splitting function and a polarization beam combining function. Specific implementations of the first polarization beam combining and splitting module 40 and the second polarization beam combining and splitting module 50 are not limited in this application. For example, both the first polarization beam combining and splitting module 40 and the second polarization beam combining and splitting module 50 are polarization beam splitters (Polarization Beam Splitter, PBS). It should be further understood that, a function of the polarization adjustment module 60 is to adjust polarization states of two paths of polarized light after polarization beam splitting. In another possible implementation, two polarization adjustment apparatuses may be alternatively used for implementing a same function as the polarization adjustment module 60, that is, each polarization adjustment apparatus is configured to adjust a polarization state of one path of polarized light corresponding to the polarization adjustment apparatus. FIG. 2(b) is a planar diagram of a second structure of an optical module according to an embodiment of this application. A difference from FIG. 2(a) lies in that, as shown in FIG. 2(b), the polarization adjustment module 60 includes a first polarization adjustment apparatus 601 and a second polarization adjustment apparatus 602.

During actual application, a size of a component for polarization adjustment is usually not too large, so that it is more convenient to use two polarization adjustment apparatuses. For ease of description, the following uses an example in which the optical module uses two polarization adjustment apparatuses for description.

It should be noted that the optical module provided in this application may be of an integrated structure, that is, components in the optical module are seamlessly spliced together, so that an overall structure of the optical module is more compact, to help implement miniaturization of the optical module. In addition, a process difficulty caused by scattered assembly of a large quantity of discrete optical elements in the optical module is avoided. In an example, as shown in FIG. 2(b), a dark shaded part represents the first polarization beam combining and splitting module 40, and a light shaded part represents the second polarization beam combining and splitting module 50. Two side end faces of the first polarization adjustment apparatus 601 and the second polarization adjustment apparatus 602 are respectively completely aligned with and attached to the first polarization beam combining and splitting module 40 and the second polarization beam combining and splitting module 50, so that an overall structure of the optical module is more regular.

The following separately describes in detail optical paths of the optical module in a transmitting direction and in a receiving direction. It should be noted that some reflective elements further need to be used in the optical module for cooperation to implement an optical path design. A quantity of reflective elements and a specific placement manner are not limited in this application. The following embodiments provide a simplified optical path design. Based on this, another optical path design in which a quantity of reflective elements and a placement manner are changed also falls within the protection scope of this application. This is not listed one by one in this application. It should be further noted that, for ease of distinguishing light in different polarization states, in the following, light having a first polarization state is collectively referred to as P light, and light having a second polarization state is collectively referred to as S light. The polarization states of the P light and the S light are orthogonal to each other, the P light is represented by a vertical line in the accompanying drawings, and the S light is represented by a dot in the accompanying drawings.

FIG. 3 is a diagram of an optical path of an optical module in a transmitting direction according to an embodiment of this application. As shown in FIG. 3, in an optical transmitting direction, a first light beam input from a first port 10 is a dual-polarized light beam, that is, the first light beam includes P light and S light. The first light beam is reflected by a first reflective element 801 to a first polarization beam combining and splitting plane 401 of a first polarization beam combining and splitting module 40. The first polarization beam combining and splitting plane 401 performs polarization beam splitting on the first light beam to obtain the P light and the S light, where the first polarization beam combining and splitting plane 401 transmits the P light and reflects the S light. The P light is reflected to a first polarization adjustment apparatus 601 by a second reflective element 802, and the S light is transmitted to a second polarization adjustment apparatus 602. After passing through the first polarization adjustment apparatus 601, the P light retains a polarization state, and is still the P light. After passing through the second polarization adjustment apparatus 602, the S light retains a polarization state, and is still the S light. After passing through the first polarization adjustment apparatus 601, the P light is transmitted to a second polarization beam combining and splitting plane 501 of a second polarization beam combining and splitting module 50. After passing through the second polarization adjustment apparatus 602, the S light is reflected by a third reflective element 803 to the second polarization beam combining and splitting plane 501 of the second polarization beam combining and splitting module 50. The second polarization beam combining and splitting plane 501 performs polarization beam combining on the P light and the S light to obtain a second light beam. Specifically, the second polarization beam combining and splitting plane 501 transmits the P light and reflects the S light to obtain the second light beam, and the second light beam is output from a second port 20.

It should be noted that, in the embodiment shown in FIG. 3, a dual-polarized light beam is input from the first port 10, so that the first port 10 can be connected to a normal optical fiber instead of a polarization maintaining optical fiber, to reduce costs. In addition, in some possible scenarios, the first port 10 may be alternatively connected to a polarization maintaining optical fiber, and a single-polarized light beam is input from the first port 10. In other words, the optical module provided in this application supports input of a dual-polarized light beam from the first port 10, and also supports input of a single-polarized light beam from the first port 10, to extend an application scenario of the optical module. The following describes in detail an embodiment in which a single-polarized light beam is input from the first port 10.

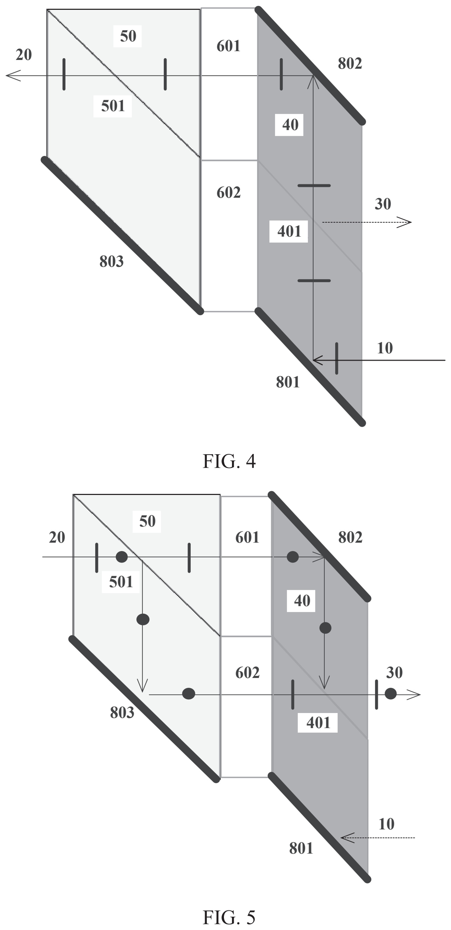

FIG. 4 is a diagram of another optical path of an optical module in a transmitting direction according to an embodiment of this application. Unlike the optical path shown in FIG. 3, as shown in FIG. 4, in the optical transmitting direction, a first light beam input from the first port 10 is a single-polarized light beam. A polarization state of the single-polarized light beam is not limited in this application. Herein, an example in which the first light beam is P light is used. The P light input from the first port 10 is reflected by the first reflective element 801 to the first polarization beam combining and splitting plane 401 of the first polarization beam combining and splitting module 40. The P light that is transmitted through the first polarization beam combining and splitting plane 401 is reflected by the second reflective element 802 to the first polarization adjustment apparatus 601. After passing through the first polarization adjustment apparatus 601, the P light retains a polarization state, and is still the P light. After passing through the first polarization adjustment apparatus 601, the P light is transmitted to the second polarization beam combining and splitting plane 501 of the second polarization beam combining and splitting module 50, and is transmitted to the second port 20 through the second polarization beam combining and splitting plane 501.

In some possible scenarios, a light beam input from the first port 10 is a multi-wavelength light beam. In other words, the optical module provided in this application can adapt to a multi-wavelength transmission scenario. In the embodiment shown in FIG. 3, the multi-wavelength light beam input from the first port 10 includes P light and S light. In an example, a light beam of a portion of wavelengths in the multi-wavelength light beam is P light in a single polarization state, and a light beam of the other portion of wavelengths in the multi-wavelength light beam is S light in a single polarization state. In another example, a light beam of at least one wavelength in the multi-wavelength light beam is a dual-polarized light beam including P light and S light.

It should be noted that, in the optical receiving direction, a light beam input from the second port 20 of the optical module is a dual-polarized light beam including two polarization states. The following describes in detail an optical path of the optical module in the optical receiving direction.

FIG. 5 is a diagram of an optical path of an optical module in a receiving direction according to an embodiment of this application. As shown in FIG. 5, a third light beam input from the second port 20 is a dual-polarized light beam, that is, the third light beam includes P light and S light. A second polarization beam combining and splitting plane 501 of the second polarization beam combining and splitting module 50 performs polarization beam splitting on the third light beam to obtain the P light and the S light. Specifically, the second polarization beam combining and splitting plane 501 transmits the P light and reflects the S light. The P light is transmitted to the first polarization adjustment apparatus 601, and the S light is reflected to the second polarization adjustment apparatus 602 by the third reflective element 803. After passing through the first polarization adjustment apparatus 601, the P light becomes S light, and the S light is reflected to the first polarization beam combining and splitting plane 401 of the first polarization beam combining and splitting module 40 by the second reflective element 802. After passing through the second polarization adjustment apparatus 602, the S light becomes P light, and the P light is transmitted to the first polarization beam combining and splitting plane 401 of the first polarization beam combining and splitting module 40. The first polarization beam combining and splitting plane 401 performs polarization beam combining on the P light and the S light, and then outputs combined light from the third port 30. Specifically, the first polarization beam combining and splitting plane 401 transmits the P light and reflects the S light.

It should be noted that each port in the optical module supports both single-mode light beam transmission and multi-mode light beam transmission. In other words, each port in the optical module may be connected to a single-mode optical fiber, or may be connected to a multi-mode optical fiber. It should be understood that currently, a single-mode optical fiber is mainly used in a single-fiber bidirectional scenario. The optical module designed in this application is of a compact structure and has a high integration level, so that ports of the optical module may be used with a multi-mode optical fiber, thereby extending an application scenario of this application and reducing costs. It should be further noted that a wavelength of a light beam input from the first port 10 in the optical transmitting direction may be the same as or different from a wavelength of a light beam input from the second port 20 in the optical receiving direction. This is specifically subject to actual application, and is not limited in this application. For example, all three ports of the optical module are connected to a single-mode optical fiber. For another example, all three ports of the optical module are connected to a multi-mode optical fiber. For another example, the three ports of the optical module include a port connected to a single-mode optical fiber and a port connected to a multi-mode optical fiber.

It can be learned from the foregoing descriptions that the optical module provided in this application implements bidirectional optical transmission based on a principle of polarization beam splitting. The optical module has a high integration level, is easy to implement miniaturization, and has a low insertion loss. The first port and the third port are disposed side by side on a same side of the optical module, the first port is configured to be connected to an optical transmitting module, the third port is configured to be connected to an optical receiving module, and the optical transmitting module and the optical receiving module can be designed more compactly instead of being too far apart. In addition, an optical path of the optical module is designed, so that optical paths of light in two polarization states in the optical module are similar or the same, and an implementation effect is better. Based on this, the optical module provided in this application can further prevent crosstalk between ports caused by optical reflection or reverse transmission.

In a possible implementation, if the second port 20 is connected to an optical fiber connector with an end face of physical contact (Physical Contact, PC) or ultra physical contact (Ultra Physical Contact, UPC), when the end face of the optical fiber connector is contaminated or is not securely inserted, light output from the second port 20 may be reflected on the end face of the optical fiber connector, which is generally referred to as near-end reflection. To avoid near-end reflection, the second port 20 is connected to an APC (Angled Physical Contact) optical fiber connector with an oblique end face. The end face of the APC connector is usually polished into an 8° slope. Reflected light is reflected to a cladding layer at an angle of the slope instead of directly returning to the light source along an original optical path. This minimizes impact of back reflection on the light source.

In a possible implementation, in the optical receiving direction, if implementation effects of the first polarization adjustment apparatus 601 and the second polarization adjustment apparatus 602 are not ideal, some light may be output from the first port 10 and transmitted to the light source. To avoid this case, an isolator may be added between the first port 10 and the light source, and a light beam output from the first port 10 is isolated by using the isolator.

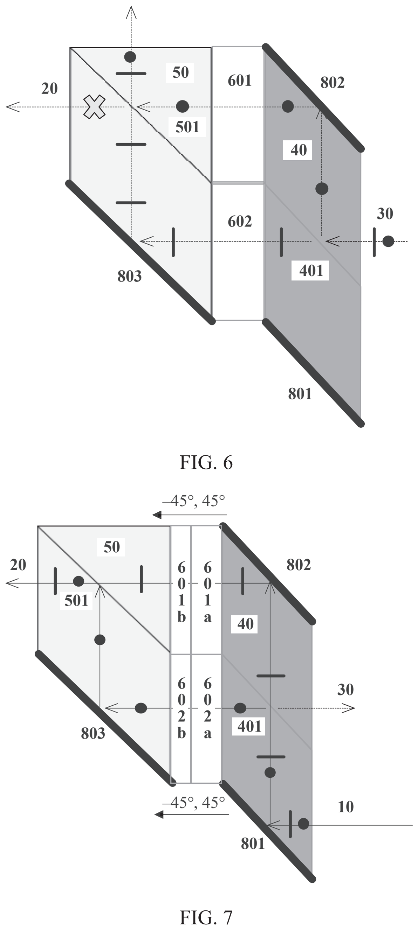

In a possible implementation, a small part of light may be reflected from the third port 30 back to the optical module. Based on a design of the optical module, this part of light cannot be output from the second port 20 along an original optical path, so that interference with light in the transmitting direction is avoided. FIG. 6 is a diagram of an optical path of near-end reflection of an optical module according to an embodiment of this application. As shown in FIG. 6, light input from the third port 30 includes P light and S light, and the first polarization beam combining and splitting module 40 transmits the P light and reflects the S light. After passing through the first polarization adjustment apparatus 601, the P light retains a polarization state, and is still the P light. After passing through the second polarization adjustment apparatus 602, the S light retains a polarization state, and is still the S light. After passing through the second polarization adjustment apparatus 602, the P light is reflected by a third reflective element 803 to the second polarization beam combining and splitting module 50. After passing through the first polarization adjustment apparatus 601, the S light is transmitted to the second polarization beam combining and splitting module 50. The second polarization beam combining and splitting module 50 transmits the P light and reflects the S light to obtain a light beam after polarization beam combining. It can be learned that the light beam after polarization beam combining is not output from the second port 20, and does not affect a light beam reverse output from the second port in the optical transmitting direction.

It should be noted that, based on the related descriptions of FIG. 3 to FIG. 5, in the optical transmitting direction, the polarization state of the polarized light remains unchanged after the polarized light passes through the first polarization adjustment apparatus 601 or the second polarization adjustment apparatus 602, and in the optical receiving direction, the polarization state of the polarized light is rotated by 90° after the polarized light passes through the first polarization adjustment apparatus 601 or the second polarization adjustment apparatus 602. That is, the first polarization adjustment apparatus 601 and the second polarization adjustment apparatus 602 have different polarization adjustment modes for the optical transmitting direction and the optical receiving direction. The following describes this with reference to a specific implementation of the first polarization adjustment apparatus 601 and the second polarization adjustment apparatus 602.

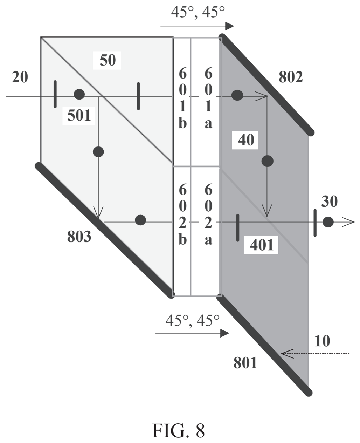

FIG. 7 is a diagram of an optical path of a polarization adjustment apparatus in an optical transmitting direction according to an embodiment of this application. FIG. 8 is a diagram of an optical path of a polarization adjustment apparatus in an optical receiving direction according to an embodiment of this application. As shown in FIG. 7 and FIG. 8, a first polarization adjustment apparatus 601 includes a first FR 601a and a first HWP 601b, and a second polarization adjustment apparatus 602 includes a second FR 602a and a second HWP 602b. It should be understood that, for the FR, regardless of the optical transmitting direction or the optical receiving direction, the FR adjusts a polarization state toward a fixed direction. For the HWP, the HWP may adjust a polarization state toward different directions based on different light transmission directions. A fifth direction and a sixth direction mentioned below represent rotation directions of a polarization state of light, and the fifth direction is opposite to the sixth direction.

As shown in FIG. 7, in the optical transmitting direction, the first FR 601a rotates a polarization state of P light by 45° toward the fifth direction, and the first HWP 601b rotates a polarization state of polarized light passing through the first FR 601a by 45° toward the sixth direction. In this way, the P light is still P light after passing through the first FR 601a and the first HWP 601b. Similarly, the second FR 602a rotates a polarization state of S light by 45° toward the fifth direction, and then the second HWP 602b rotates a polarization state of polarized light passing through the second FR 602a by 45° toward the sixth direction. In this way, the S light is still S light after passing through the second FR 602a and the second HWP 602b.

As shown in FIG. 8, in the optical receiving direction, the first HWP 601b rotates a polarization state of P light by 45° toward the fifth direction, and the first FR 601a rotates a polarization state of polarized light passing through the first HWP 601b by 45° toward the fifth direction. In this way, the P light becomes S light after passing through the first HWP 601b and the first FR 601a. Similarly, the second HWP 602b rotates a polarization state of S light by 45° toward the fifth direction, and the second FR 602a rotates a polarization state of polarized light passing through the second HWP 602b by 45° toward the fifth direction. In this way, the S light becomes P light after passing through the second HWP 602b and the second FR 602a.

It should be noted that, in the embodiments shown in FIG. 7 and FIG. 8, the first FR 601a and the first HWP 601b may also achieve same effect by exchanging positions. Similarly, the second FR 602a and the second HWP 602b may also achieve same effect by exchanging positions, and no accompanying drawings are provided herein. In an example, the positions of the first FR 601a and the first HWP 601b are exchanged, and the positions of the second FR 602a and the second HWP 602b are also exchanged. In another example, the first FR 601a and the first HWP 601b remain in the positions shown in FIG. 7 and FIG. 8, and the positions of the second FR 602a and the second HWP 602b are exchanged. In still another example, the second FR 602a and the second HWP 602b remain in the positions shown in FIG. 7 and FIG. 8, and the positions of the first FR 601a and the first HWP 601b are exchanged.

It should further be noted that specific shapes of components in the optical module are not limited in this application. The drawings provided in this application show one possible design of the optical module. Any simple variations in shape based on this design also fall within the protection scope of this application.

It should be understood that the optical module described above may be applied to a plurality of different scenarios such as an optical transceiver module, a lidar, and an optical amplification system. The following describes in detail some possible specific application scenarios of the optical module.

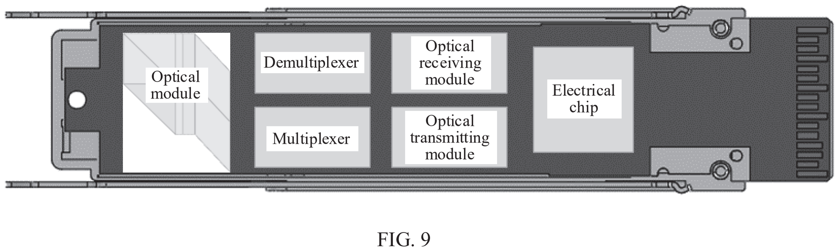

FIG. 9 is a diagram of a structure of an optical transceiver module according to an embodiment of this application. As shown in FIG. 9, the optical transceiver module includes an optical module, an optical transmitting module, an optical receiving module, and an electrical chip. Optionally, the optical transceiver module further includes a multiplexer and a demultiplexer. The optical module may be the optical module described in any one of the foregoing embodiments. Details are not described herein again. A first port of the optical module is connected to the multiplexer, and a third port of the optical module is connected to the demultiplexer. The electrical chip is configured to control the optical transmitting module and the optical receiving module. In a scenario in which the optical transceiver module includes a multiplexer and a demultiplexer, the optical transmitting module usually includes a plurality of lasers having different wavelengths and a plurality of modulators that are in one-to-one correspondence, or the optical transmitting module includes a plurality of lasers that have different wavelengths and that can be modulated, and the optical receiving module usually includes a photoelectric detector. Specifically, the multiplexer combines a plurality of light beams of different wavelengths transmitted from a light source to obtain a multiplexed light beam, and sends the multiplexed light beam to a first port of the optical module. The demultiplexer is configured to: demultiplex a light beam from the third port of the optical module to obtain a plurality of light beams of different wavelengths, and send the plurality of light beams of different wavelengths obtained through demultiplexing to the photoelectric detector.

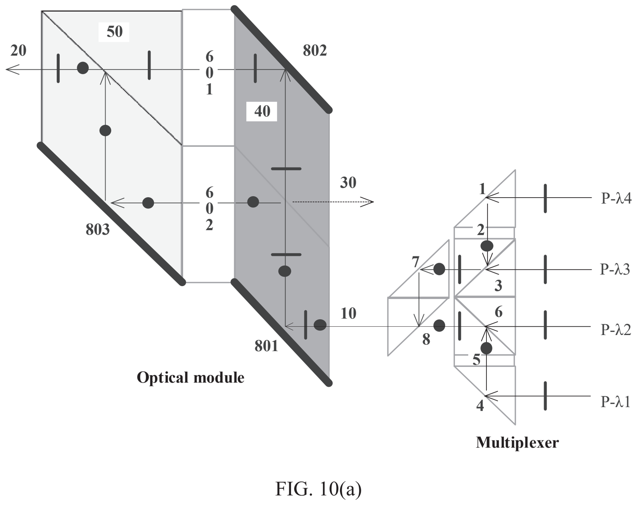

FIG. 10(a) is a diagram of a structure of a multiplexer according to an embodiment of this application. As shown in FIG. 10(a), light with four different wavelengths transmitted by an optical transmitting module is used as an example. The four different wavelengths are denoted as λ1, λ2, λ3, and λ4, and the light with the four different wavelengths is all P light. The multiplexer includes a reflector 1, an HWP 2, a PBS 3, a reflector 4, an HWP 5, a PBS 6, a reflector 7, and a filter 8. Specifically, the P light of the wavelength λ4 is reflected to the HWP 2 through the reflector 1, and becomes S light of the wavelength λ4 after passing through the HWP 2. The PBS 3 performs polarization beam combining on the P light of the wavelength λ3 and the S light of the wavelength λ4, and light after polarization beam combining is transmitted to the filter 8 through the reflector 7. The P light of the wavelength λ1 is reflected to the HWP 5 through the reflector 4, and becomes S light of the wavelength λ1 after passing through the HWP 5. The PBS 6 performs polarization beam combining on the P light of the wavelength λ2 and the S light of the wavelength λ1, and light after polarization beam combining is transmitted to the filter 8. The filter 8 multiplexes light obtained through polarization beam combining by the PBS 3 and light obtained through polarization beam combining by the PBS 6, and transmits a multiplexed light beam to a first port 10 of the optical module. The multiplexed light beam includes S light of a wavelength λ1, P light of a wavelength λ2, P light of a wavelength λ3, and S light of a wavelength λ4.

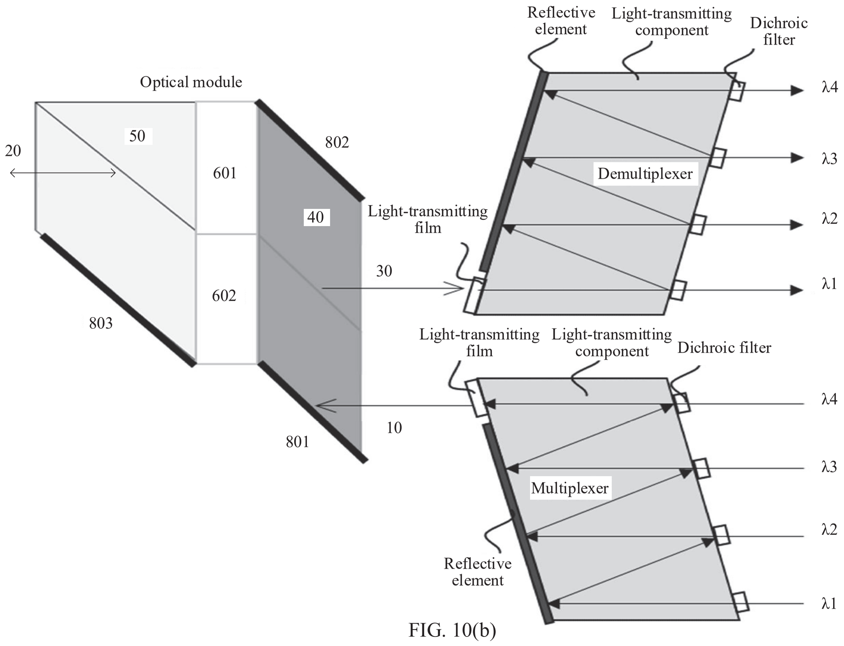

FIG. 10(b) is a diagram of a structure of a spatial multiplexer and a spatial demultiplexer according to an embodiment of this application. As shown in FIG. 10(b), light with four different wavelengths transmitted by the optical transmitting module is used as an example. The four different wavelengths are denoted as λ1, λ2, λ3, and λ4, and the light with the four different wavelengths is all dual-polarized light beams. The multiplexer includes four input ports on one side, and an output port and a reflective element on the other side. A part between two sides of the multiplexer is a light-transmitting component. The light with the four different wavelengths is respectively input from the four input ports to the multiplexer. Each input port of the multiplexer is provided with a dichroic filter, and each dichroic filter is configured to transmit light of a wavelength corresponding to the dichroic filter and reflect light of another wavelength. It can be learned from the optical path shown in FIG. 10(b) that, after being multiplexed, the light with the four different wavelengths is output to the first port 10 of the optical module from the output port on which a light-transmitting film is disposed. The demultiplexer includes an input port and a reflective element on one side, and four output ports on the other side, and a part between two sides of the demultiplexer is a light-transmitting component. Light from the third port 30 of the optical fiber module is input to the demultiplexer from an input port on which a light-transmitting film is disposed. Each output port of the demultiplexer is provided with a dichroic filter, and each dichroic filter is configured to transmit light of a wavelength corresponding to the dichroic filter and reflect light of another wavelength. It can be learned from the optical path shown in FIG. 10(b) that the light with the four different wavelengths is respectively output to the optical receiving module from the four output ports of the demultiplexer.

Optionally, in the scenario shown in FIG. 10(b), the output port of the multiplexer may not be completely aligned with the first port 10 of the optical module. To ensure that light output by the multiplexer can be smoothly input to the optical module from the first port 10, a light beam offset component may be further disposed between the output port of the multiplexer and the first port 10 of the optical fiber module. Similarly, the third port 30 of the optical module may not be completely aligned with the input port of the demultiplexer. To ensure that light output from the third port 30 of the optical module can be smoothly input from the input port of the demultiplexer, a light beam offset component may be further disposed between the third port 30 of the optical module and the input port of the demultiplexer.

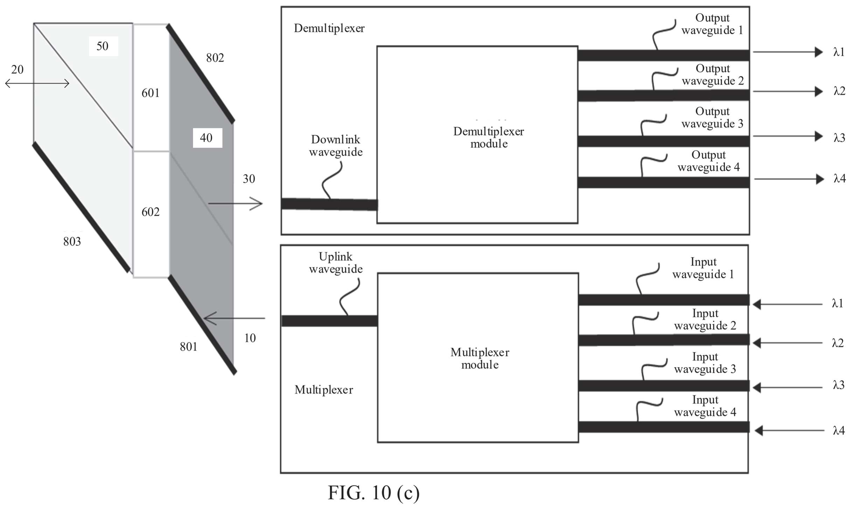

FIG. 10(c) is a diagram of a structure of a waveguide multiplexer and a waveguide demultiplexer according to an embodiment of this application. As shown in FIG. 10(c), light with four different wavelengths transmitted by the optical transmitting module is used as an example. The four different wavelengths are denoted as λ1, λ2, λ3, and λ4, and the light with the four different wavelengths is all dual-polarized light beams. The multiplexer includes a multiplexer module, four input waveguides, and an uplink waveguide, and the demultiplexer includes a demultiplexer module, four output waveguides, and a downlink waveguide. In the optical transmitting direction, light with four different wavelengths transmitted by the optical transmitting module is respectively input to the optical multiplexer module by using the four input waveguides. After multiplexing the light with the four different wavelengths, the optical multiplexer module outputs a multiplexed light beam to the first port 10 of the optical module by using the uplink waveguide. In the optical receiving direction, a light beam from the third port 30 of the optical module is transmitted to the demultiplexer module by using the downlink waveguide. The demultiplexer module demultiplexes the input light beam, and outputs light with four different wavelengths obtained through demultiplexing to the optical receiving module by using the four output waveguides.

It should be understood that the multiplexer shown in FIG. 10(a), FIG. 10(b), and FIG. 10(c) is merely a possible implementation. In addition, the multiplexer may alternatively use another implementation, for example, a thin-film filter for multiplexing or a waveguide-type multiplexer. This is not specifically limited herein. Similarly, the demultiplexer may alternatively use another implementation, for example, a thin-film filter or a waveguide-type demultiplexer. This is not specifically limited herein. In addition, the foregoing four-wavelength multiplexing/demultiplexing scenario is merely an example. During actual application, a quantity of multiplexed/demultiplexed wavelengths is subject to a specific design, and is not limited herein.

It should be noted that FIG. 9 is used as an example. In some other possible scenarios, a multiplexer/demultiplexer may be used for replacing the multiplexer and the demultiplexer. The following describes several possible implementations of the multiplexer/demultiplexer.

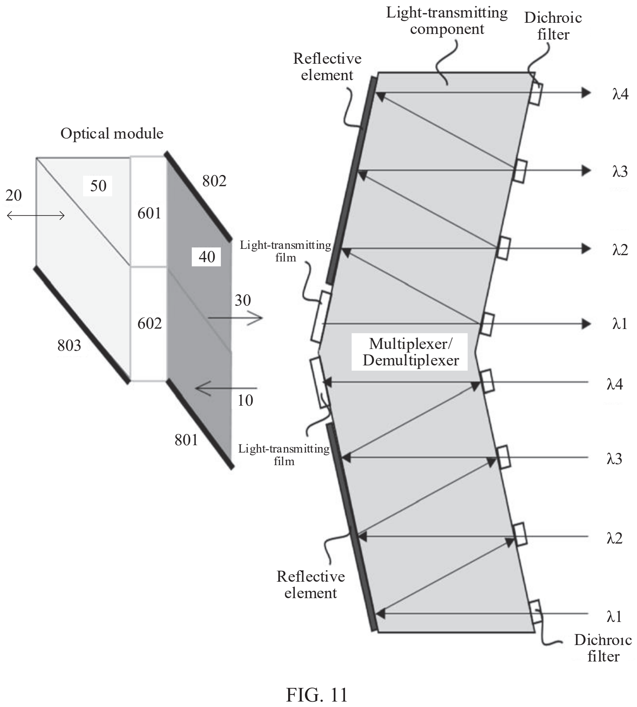

FIG. 11 is a diagram of a structure of a multiplexer/demultiplexer according to an embodiment of this application. It can be learned that the multiplexer/demultiplexer shown in FIG. 11 is equivalent to an integrated structure obtained by combining the multiplexer and the demultiplexer shown in FIG. 10(b). A multiplexing/demultiplexing scenario of four different wavelengths is used as an example. In an optical transmitting direction, light with four different wavelengths is respectively input from four input ports of the multiplexer/demultiplexer, and multiplexed light is output to the first port 10 of the optical module. In an optical receiving direction, a multiplexed light beam from the third port 30 of the optical module is input to the multiplexer/demultiplexer, and light with four different wavelengths obtained through demultiplexing is respectively output from four output ports of the multiplexer/demultiplexer.

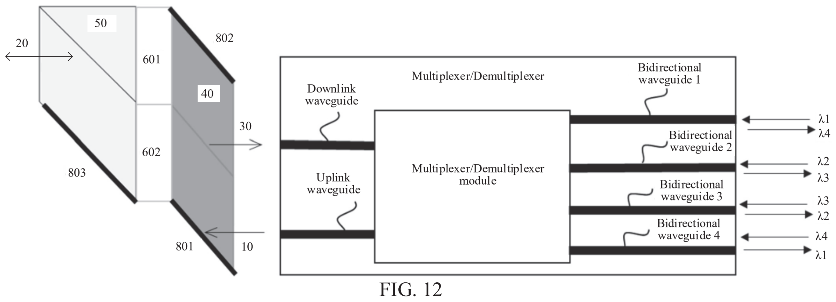

FIG. 12 is a diagram of a structure of another multiplexer/demultiplexer according to an embodiment of this application. It can be learned that the multiplexer/demultiplexer shown in FIG. 12 is equivalent to an integrated structure obtained by combining the multiplexer and the demultiplexer shown in FIG. 10(c). As shown in FIG. 12, the multiplexer/demultiplexer may be implemented by using a waveguide-type wavelength division multiplexer. A multiplexing/demultiplexing scenario of four different wavelengths is used as an example. The multiplexer/demultiplexer includes a multiplexer/demultiplexer module, an uplink waveguide, a downlink waveguide, and four bidirectional waveguides. In an optical transmitting direction, light with four different wavelengths is respectively input to the multiplexer/demultiplexer module by using the four bidirectional waveguides, and a light beam obtained through multiplexing by the multiplexer/demultiplexer module is transmitted to the first port 10 of the optical module by using the uplink waveguide. In an optical receiving direction, a multiplexed light beam from the third port 30 of the optical module is input to the multiplexer/demultiplexer module by using the downlink waveguide, and light with four different wavelengths that is obtained through demultiplexing by the multiplexer/demultiplexer module is respectively output to the optical receiving module by using the four bidirectional waveguides.

It should be noted that in the optical transmitting direction shown in FIG. 12, light of a wavelength λ1 is input by using a bidirectional waveguide 1, light of a wavelength λ2 is input by using a bidirectional waveguide 2, light of a wavelength λ3 is input by using a bidirectional waveguide 3, and light of a wavelength λ4 is input by using a bidirectional waveguide 4. In an optical receiving direction shown in FIG. 12, the light of the wavelength λ1 is output by using the bidirectional waveguide 4, the light of the wavelength λ2 is output by using the bidirectional waveguide 3, the light of the wavelength λ3 is output by using the bidirectional waveguide 2, and the light of the wavelength λ4 is output by using the bidirectional waveguide 1. It can be learned from a comparison between FIG. 11 and FIG. 12 that the multiplexer/demultiplexer shown in FIG. 11 needs to allocate the four input ports in the optical transmitting direction and allocate the four output ports in the optical receiving direction. The four bidirectional waveguides in the multiplexer/demultiplexer shown in FIG. 12 may transmit light in the optical transmitting direction, and may also transmit light in the optical receiving direction.

Optionally, FIG. 12 is used as an example. In some possible implementations, the four bidirectional waveguides of the multiplexer/demultiplexer may be respectively connected to four different groups of optical transmitting modules and optical receiving modules. For example, the bidirectional waveguide 1 is connected to an optical transmitting module 1 and an optical receiving module 4, and the bidirectional waveguide 1 is configured to transmit the light of the wavelength λ1 from the optical transmitting module 1, and transmit the light of the wavelength λ4 sent to the optical receiving module 4. The bidirectional waveguide 2 is connected to an optical transmitting module 2 and an optical receiving module 3, and the bidirectional waveguide 2 is configured to transmit the light of the wavelength λ2 from the optical transmitting module 2, and transmit the light of the wavelength λ3 sent to the optical receiving module 3. The bidirectional waveguide 3 is connected to an optical transmitting module 3 and an optical receiving module 2, and the bidirectional waveguide 3 is configured to transmit the light of the wavelength λ3 from the optical transmitting module 3, and transmit the light of the wavelength λ2 sent to the optical receiving module 2. The bidirectional waveguide 1 is connected to an optical transmitting module 4 and an optical receiving module 1, and the bidirectional waveguide 4 is configured to transmit the light of the wavelength λ4 from the optical transmitting module 4, and transmit the light of the wavelength λ1 sent to the optical receiving module 1.

It should be noted that in some possible implementations, a combination of a plurality of optical modules may also be used for multiplexing/demultiplexing more wavelengths. The following uses an implementation scenario of three optical modules as an example for description. A specific quantity of optical modules is subject to actual application, and is not limited herein.

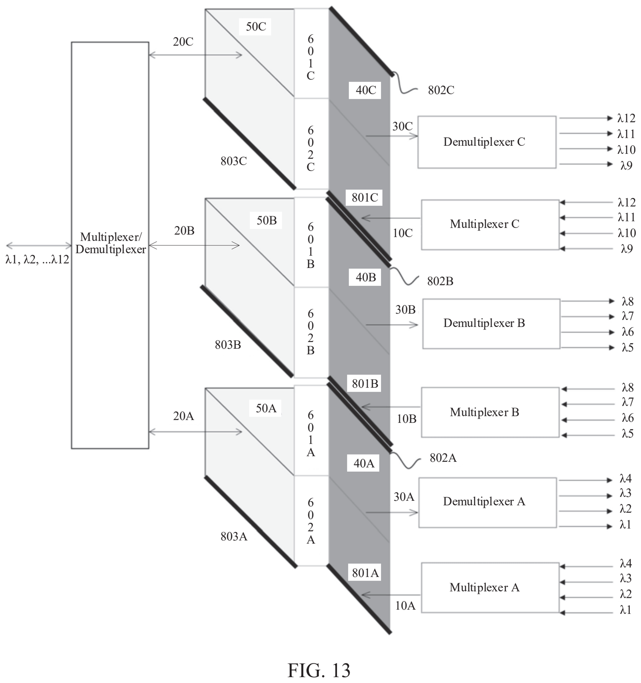

FIG. 13 is a diagram of a first implementation of a plurality of optical modules according to an embodiment of this application. As shown in FIG. 13, the three optical modules are respectively denoted as an optical module A, an optical module B, and an optical module C. First ports of the three optical modules are respectively connected to a multiplexer A, a multiplexer B, and a multiplexer C. Third ports of the three optical modules are respectively connected to a demultiplexer A, a demultiplexer B, and a demultiplexer C. Second ports of the three optical modules are all connected to a multiplexer/demultiplexer. It can be learned that each multiplexer can multiplex light beams with four different wavelengths, and each demultiplexer can demultiplex light beams with four different wavelengths. In this case, combining the three optical modules can implement multiplexing and demultiplexing of light beams with 12 different wavelengths. In the optical transmitting direction, the multiplexer/demultiplexer multiplexes light with a total of 12 wavelengths from the second ports of the three optical modules and outputs multiplexed light. In an optical receiving direction, the multiplexer/demultiplexer demultiplexes input light to obtain light with 12 different wavelengths, and outputs light with four wavelengths as one group to the three optical modules. It should be understood that in the implementation shown in FIG. 13, three mutually independent optical modules are used. In some other possible scenarios, a plurality of optical modules may be integrated, that is, a plurality of optical modules are implemented as an integrated structure.

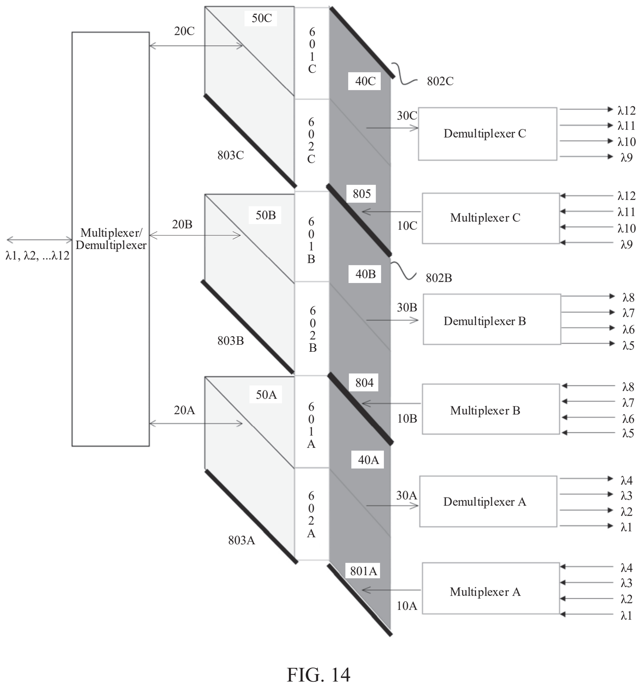

FIG. 14 is a diagram of a structure of a second implementation of a plurality of optical modules according to an embodiment of this application. A difference between the structure shown in FIG. 14 and the structure shown in FIG. 13 lies in that three optical modules are designed as an integrated structure. Specifically, an optical module A and an optical module B share a reflective element 804, and the optical module B and an optical module C share a reflective element 805. For the optical module A, the reflective element 804 implements a function similar to that of the reflective element 802A. For the optical module B, the reflective element 804 implements a function similar to that of the reflective element 801B, and the reflective element 805 implements a function similar to that of the reflective element 802B. For the optical module C, the reflective element 805 implements a function similar to that of the reflective element 801C. In addition, a polarization adjustment apparatus 601A in the optical module A is attached to a polarization adjustment apparatus 602B in the optical module B, and a polarization adjustment apparatus 601B in the optical module B is attached to a polarization adjustment apparatus 602C in the optical module C. In some possible implementations, independent polarization adjustment apparatuses in the three optical modules may be integrated into one polarization adjustment module to implement similar functions.

It should be noted that, in the scenarios shown in FIG. 13 and FIG. 14, optical modules may be equipped with multiplexers of a same structure, or connected to multiplexers of different structures. For example, all optical modules are equipped with the multiplexer shown in FIG. 10(a). For another example, all optical modules are equipped with the multiplexer shown in FIG. 10(b). For still another example, some optical modules are equipped with the multiplexer shown in FIG. 10(a), and the other some optical modules are equipped with the optical multiplexer shown in FIG. 10(b). Similarly, the optical modules may be equipped with demultiplexers of a same structure, or may be connected to demultiplexers of different structures. It should be further noted that the multiplexer/demultiplexer shown in FIG. 11 or FIG. 12 may be used for replacing the multiplexer and the demultiplexer in the scenario shown in FIG. 13 or FIG. 14. In addition, the optical modules may be equipped with multiplexers/demultiplexers of a same structure, or may be connected to multiplexers/demultiplexers of different structures. No accompanying drawings are provided herein.

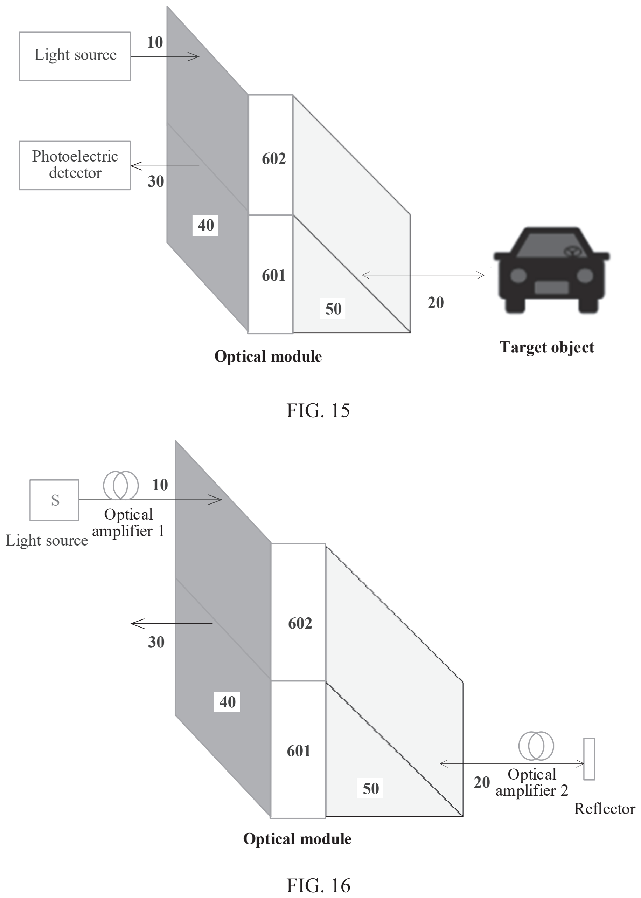

FIG. 15 is a diagram of a structure of a lidar according to an embodiment of this application. As shown in FIG. 15, the lidar includes a light source, a photoelectric detector, and an optical module. The optical module may be the optical module described in any one of the foregoing embodiments. Details are not described herein again. A first port 10 of the optical module is connected to the light source, and a third port 30 of the optical module is connected to the photoelectric detector. Specifically, a light beam transmitted from the light source is input from the first port 10 of the optical module and output from a second port 20. The light beam output from the second port 20 is reflected by a target object, and then transmitted back to the second port 20, and is output to the photoelectric detector from the third port 30. The photoelectric detector can process the received light beam to calculate time of flight of the light beam, so as to implement a radar ranging function.

FIG. 16 is a diagram of a structure of an optical amplification system according to an embodiment of this application. For example, the optical amplification system is used in scenarios such as a long-distance optical transmission network and optical sensing. As shown in FIG. 16, the optical amplification system includes a light source, a first optical amplifier (optical amplifier 1 for short), a second optical amplifier (optical amplifier 2 for short), a reflector, and an optical module. The optical module may be the optical module described in any one of the foregoing embodiments. Details are not described herein again. Two ends of the optical amplifier 1 are respectively connected to the light source and a first port 10 of the optical module. Two ends of the optical amplifier 2 are respectively connected to the reflector and a second port 20 of the optical module. Specifically, the optical amplifier 1 amplifies a light beam transmitted from the light source, and transmits an amplified light beam to the first port 10 of the optical module. A light beam output from the second port 20 of the optical module is amplified by the optical amplifier 2 and then transmitted to the reflector. After being amplified by the optical amplifier 2, the light beam reflected by the reflector is transmitted to the second port 20 of the optical module, and is output from a third port 30 of the optical module.

It should be noted that the foregoing embodiments are merely intended to describe technical solutions of this application, but not to limit the technical solutions. Although this application is described in detail with reference to the foregoing embodiments, a person of ordinary skill in the art should understand that modifications may still be made to the technical solutions described in the foregoing embodiments, or equivalent replacements may be made to some technical features thereof, and such modifications and replacements do not cause the essence of corresponding technical solutions to depart from the spirit and scope of the technical solutions in embodiments of this application.

## Claims

1. An optical module, comprising: a first port, a second port, a third port, a first polarization beam combining and splitting module, a second polarization beam combining and splitting module, a polarization adjustment module, and a magnet, wherein the first port and the third port are disposed on a first end face of the first polarization beam combining and splitting module, the second port is disposed on a first end face of the second polarization beam combining and splitting module, the polarization adjustment module and the magnet are located between the first polarization beam combining and splitting module and the second polarization beam combining and splitting module, at least one end face of the polarization adjustment module other than two end faces in a first direction is attached to the magnet, and the magnet is configured to provide magnetism for the polarization adjustment module;
the first polarization beam combining and splitting module is configured to perform polarization beam splitting on a first light beam input from the first port, to obtain first polarized light having a first polarization state and second polarized light having a second polarization state, wherein the first polarization state and the second polarization state are orthogonal to each other;
the polarization adjustment module is configured to perform polarization adjustment on the first polarized light input in the first direction to obtain the first polarized light, and perform polarization adjustment on the second polarized light input in the first direction to obtain the second polarized light;
the second polarization beam combining and splitting module is configured to perform polarization beam combining on the first polarized light and the second polarized light to obtain a second light beam, wherein the second light beam is output from the second port;
the second polarization beam combining and splitting module is further configured to perform polarization beam splitting on a third light beam input from the second port to obtain third polarized light having the first polarization state and fourth polarized light having the second polarization state;
the polarization adjustment module is further configured to perform polarization adjustment on the third polarized light input in a second direction to obtain fifth polarized light having the second polarization state, and perform polarization adjustment on the fourth polarized light input in the second direction to obtain sixth polarized light having the first polarization state, wherein the first direction is opposite to the second direction; and
the first polarization beam combining and splitting module is further configured to perform polarization beam combining on the fifth polarized light and the sixth polarized light to obtain a fourth light beam, wherein the fourth light beam is output from the third port.

2. The optical module according to claim 1, wherein the first light beam is a multi-wavelength light beam.

3. The optical module according to claim 1 or 2, wherein a light beam of a first portion of wavelengths in the first light beam has the first polarization state, and a light beam of a second portion of wavelengths in the first light beam has the second polarization state; or
a light beam of at least one wavelength in the first light beam comprises the first polarization state and the second polarization state.

4. The optical module according to claim 1 or 2, wherein a first end face of the polarization adjustment module is attached to a second end face of the first polarization beam combining and splitting module, a second end face of the polarization adjustment module is attached to a second end face of the second polarization beam combining and splitting module, the first end face and the second end face of the first polarization beam combining and splitting module are parallel to each other, and the first end face and the second end face of the second polarization beam combining and splitting module are parallel to each other.

5. The optical module according to claim 1 or 2, wherein the optical module further comprises a first reflective element, a second reflective element, and a third reflective element, the first reflective element is disposed on a third end face of the first polarization beam combining and splitting module, the second reflective element is disposed on a fourth end face of the first polarization beam combining and splitting module, the third reflective element is disposed on a third end face of the second polarization beam combining and splitting module, and the third end face of the first polarization beam combining and splitting module, the fourth end face of the first polarization beam combining and splitting module, and the third end face of the second polarization beam combining and splitting module are parallel to each other;
the first reflective element is configured to reflect the first light beam input from the first port;
the first polarization beam combining and splitting module is configured to transmit the first polarized light and reflect the second polarized light;
the second reflective element is configured to reflect the first polarized light to the polarization adjustment module;
the third reflective element is configured to reflect the second polarized light that passes through the polarization adjustment module;
the second polarization beam combining and splitting module is configured to transmit the first polarized light that passes through the polarization adjustment module, and reflect the second polarized light to obtain the second light beam;
the second polarization beam combining and splitting module is further configured to transmit the third polarized light and reflect the fourth polarized light;
the third reflective element is further configured to reflect the fourth polarized light to the polarization adjustment module;
the second reflective element is further configured to reflect the fifth polarized light that passes through the polarization adjustment module; and
the first polarization beam combining and splitting module is further configured to transmit the sixth polarized light that passes through the polarization adjustment module, and reflect the fifth polarized light to obtain the fourth light beam.

6. The optical module according to claim 1 or 2, wherein the polarization adjustment module comprises a first polarization adjustment apparatus and a second polarization adjustment apparatus;
the first polarization adjustment apparatus is configured to perform polarization adjustment on the first polarized light input in the first direction to obtain the first polarized light;
the second polarization adjustment apparatus is configured to perform polarization adjustment on the second polarized light input in the first direction to obtain the second polarized light;
the first polarization adjustment apparatus is further configured to perform polarization adjustment on the third polarized light input in the second direction to obtain the fifth polarized light having the second polarization state; and
the second polarization adjustment apparatus is further configured to perform polarization adjustment on the fourth polarized light input in the second direction to obtain the sixth polarized light having the first polarization state.

7. The optical module according to claim 6, wherein the first polarization adjustment apparatus comprises a first FR and a first HWP, and the second polarization adjustment apparatus comprises a second FR and a second HWP;
the first FR is configured to rotate a polarization state of the first polarized light by 45° toward a fifth direction, and the first HWP is configured to rotate a polarization state of polarized light passing through the first FR by 45° toward a sixth direction, to obtain the first polarized light, wherein the fifth direction is opposite to the sixth direction;
the second FR is configured to rotate a polarization state of the second polarized light by 45° toward the fifth direction, and the second HWP is configured to rotate a polarization state of polarized light passing through the second FR by 45° toward the sixth direction, to obtain the second polarized light;
the first HWP is further configured to rotate a polarization state of the third polarized light by 45° toward the fifth direction, and the first FR is further configured to rotate a polarization state of polarized light passing through the first HWP by 45° toward the fifth direction, to obtain the fifth polarized light; and
the second HWP is further configured to rotate a polarization state of the fourth polarized light by 45° toward the fifth direction, and the second FR is further configured to rotate a polarization state of polarized light passing through the second HWP by 45° toward the fifth direction, to obtain the sixth polarized light.

8. The optical module according to claim 7, wherein the first FR is attached to the second FR in a third direction, the third direction is perpendicular to the first direction, and the magnet is configured to provide magnetism for the first FR and the second FR.

9. The optical module according to claim 8, wherein another end face of the first FR in the third direction other than an end face attached to the second FR is attached to the magnet, and another end face of the second FR in the third direction other than an end face attached to the first FR is attached to the magnet.

10. The optical module according to claim 8 or 9, wherein at least one of two end faces of the first FR in a fourth direction is attached to the magnet, at least one of two end faces of the first FR in the fourth direction is attached to the magnet, and the fourth direction is perpendicular to the first direction and the third direction.

11. The optical module according to claim 1, 2, 7, 8, or 9, wherein the second port is configured to be connected to an APC-type optical fiber connector with an oblique end face.

12. The optical module according to claim 1, 2, 7, 8, or 9, wherein the first port is configured to be connected to an isolator, and the isolator is configured to isolate a light beam output from the first port.

13. An optical system, comprising a multiplexer and the optical module according to any one of claims 1 to 12, wherein the multiplexer comprises a reflective element, a half-wave plate HWP, a polarization beam combiner, a first input port, a second input port, and an output port;
the reflective element is configured to reflect, to the HWP, first polarized light that is input from the first input port and that has a first polarization state and a first wavelength;
the HWP is configured to perform polarization adjustment on the first polarized light to obtain second polarized light having a second polarization state, wherein the first polarization state and the second polarization state are orthogonal to each other; and
the polarization beam combiner is configured to perform polarization beam combining on the second polarized light and third polarized light that is input from the second input port and that has the first polarization state and a second wavelength, to obtain a multiplexed light beam, and transmit the multiplexed light beam from the output port to a first port of the optical module.

14. An optical transceiver module, comprising an optical transmitting module, an optical receiving module, and the optical module according to any one of claims 1 to 12, wherein
the optical transmitting module is configured to send a light beam to a first port of the optical module; and
the optical receiving module is configured to receive a light beam from a third port of the optical module.

15. The optical transceiver module according to claim 14, wherein the optical transceiver module further comprises a multiplexer and a demultiplexer;
the multiplexer is configured to: multiplex N light beams that are of different wavelengths and that are transmitted by the optical transmitting module, and send a multiplexed light beam to the first port of the optical module, wherein N is an integer greater than 1; and
the demultiplexer is configured to: demultiplex a light beam from the third port of the optical module to obtain N light beams of different wavelengths, and send the N light beams of different wavelengths obtained through demultiplexing to the optical receiving module.

16. The optical transceiver module according to claim 14, wherein the optical transceiver module further comprises a multiplexer/demultiplexer, and the multiplexer/demultiplexer comprises a multiplexer/demultiplexer module, an uplink waveguide, a downlink waveguide, and N bidirectional waveguides;
the optical transmitting module is configured to respectively transmit N light beams of different wavelengths to the N bidirectional waveguides;
the multiplexer/demultiplexer module is configured to: multiplex N light beams of different wavelengths from a light source, and send a multiplexed light beam to the first port of the optical module by using the uplink waveguide; and
the multiplexer/demultiplexer module is further configured to: receive a light beam from the third port of the optical module by using the downlink waveguide, demultiplex the light beam from the third port of the optical module to obtain N light beams of different wavelengths, and respectively send the N light beams of different wavelengths obtained through demultiplexing to the optical receiving module by using the N bidirectional waveguides.

17. A lidar, comprising a light source, a photoelectric detector, and the optical module according to any one of claims 1 to 12, wherein
the light source is configured to send a light beam to a first port of the optical module, wherein a light beam output from a second port of the optical module is transmitted to a target object, and a light beam reflected by the target object is transmitted to the second port of the optical module; and
the photoelectric detector is configured to receive a light beam from a third port of the optical module.

18. An optical amplification system, comprising a light source, a first optical amplifier, a second optical amplifier, a reflector, and the optical module according to any one of claims 1 to 12, wherein
the first optical amplifier is configured to amplify a light beam transmitted from the light source, and transmit an amplified light beam to a first port of the optical module;
the second optical amplifier is configured to amplify a light beam from a second port of the optical module, and transmit an amplified light beam to the reflector; and
the second optical amplifier is further configured to amplify a light beam from the reflector, and transmit an amplified light beam to the second port of the optical module.
